# EUROPÄISCHE PATENTANMELDUNG

(11) **EP 4 717 063 A1**
(43) Veröffentlichungstag der Anmeldung: **01.04.2026**
(21) Anmeldenummer: 25198597.4
(22) Anmeldetag: 28.08.2025
(51) Int. Cl.: A01C 5/06

(54) **SAATGUTANDRUCKROLLE UND SÄMASCHINE**

(30) Priorität: 27.09.2024 DE 102024128068
(71) Anmelder: Amazonen-Werke H. Dreyer SE & Co. KG, 49205 Hasbergen (DE)
(72) Erfinder: Breuer, Jan Henrik, 49205 Hasbergen-Gaste (DE); Johannaber, Stefan Jan, 49205 Hasbergen-Gaste (DE)

(57) **Zusammenfassung**

Saatgutandruckrolle (10) zur Verwendung in einer landwirtschaftlichen Sämaschine, mit einer Lauffläche (14), welche dazu eingerichtet ist, im Betrieb der landwirtschaftlichen Sämaschine Saatgut zu fangen und/oder in einer Säfurche (S) anzudrücken, gekennzeichnet durch zwei zueinander angewinkelte Andruckrollenscheiben (12, 12a, 12b).

## Beschreibung

Die Erfindung betrifft eine Saatgutandruckrolle nach dem Oberbegriff des Anspruchs 1, ein Säaggregat nach dem Oberbegriff des Anspruchs 14 und eine Sämaschine nach dem Oberbegriff des Anspruchs 15.

Saatgutandruckrollen werden in landwirtschaftlichen Sämaschinen eingesetzt, um im Betrieb der landwirtschaftlichen Sämaschine das Saatgut in der Säfurche anzudrücken. Durch das Andrücken des Saatguts wird insbesondere erreicht, dass das Saatgut eine ausreichend große Kontaktfläche mit der Erde der landwirtschaftlichen Nutzfläche aufweist und folglich eine ausreichende Wasserversorgung für das Saatgut gewährleistet wird. Saatgutandruckrollen können, insbesondere wenn das Saatgut mittels einer Überdruckvereinzelung der landwirtschaftlichen Sämaschine auf der landwirtschaftlichen Nutzfläche ausgebracht wird, zusätzlich dazu eingerichtet sein, das Saatgut zu fangen. Durch das Fangen des Saatguts wird gewährleistet, dass das Saatgut an der vorgesehenen Position der Säfurche angedrückt werden kann.

In diesem Zusammenhang ist die Druckschriften DE 28 10 221 B1 zu nennen, in welcher eine Andrückeinrichtung für Saatgut beansprucht wird. Ferner sind die Druckschriften EP 1 461 988 B1 und EP 3 207 784 B1 zu nennen, welche als Walkrollen ausgebildete Saatgutandruckrollen offenbaren. In der Druckschrift WO 2020/112015 A1 wird ein Pressrad zum Aufnehmen und/oder Verdichten von Material, das von einem landwirtschaftlichen Gerät dem Boden zugeführt wird, offenbart.

Wird Saatgut bei feuchten Bedingungen in Säfurchen einer landwirtschaftlichen Nutzfläche mittels einer Saatgutandruckrolle angedrückt, so kann feuchte Erde an der Saatgutandruckrolle anhaften und somit das in oder an der Erde befindliche Saatgut aus der Säfurche transportieren. Zudem kann die an der Saatgutandruckrolle anhaftende Erde zwischen Saatgutandruckrollenhalter und Saatgutandruckrolle gefördert werden. Folglich kann die Saatgutandruckrolle abgebremst werden oder stehenbleiben. In diesem Falle kann kein zuverlässiges Fangen und Andrücken des Saatguts mittels der Saatgutandruckrolle gewährleistet werden.

Die der Erfindung zugrunde liegende Aufgabe besteht somit darin, das Anhaften von Erde an der Saatgutandruckrolle, insbesondere bei feuchten Bedingungen, zu reduzieren.

Die der Erfindung zugrunde liegende Aufgabe wird durch eine Saatgutandruckrolle der eingangs genannten Art gelöst, wobei die Saatgutandruckrolle zwei zueinander angewinkelte Andruckrollenscheiben umfasst. Dadurch, dass die Saatgutandruckrolle zwei zueinander angewinkelte Andruckrollenscheiben umfasst, wird ein Abfallen von an den zwei Andruckrollenscheiben anhaftender Erde begünstigt. Dadurch, dass die Saatgutandruckrolle zwei zueinander angewinkelte Andruckrollenscheiben umfasst, können die zwei Andruckrollenscheiben jeweils bereichsweise unterschiedlich starken Kontakt mit den Furchenflanken der Säfurche haben. Folglich kann an den zwei Andruckrollenscheiben anhaftende Erde bei Kontakt der Furchenflanke mit der Säfurche abgestreift werden.

Die landwirtschaftliche Sämaschine umfasst ein auf einer landwirtschaftlichen Nutzfläche Säfurchen erzeugendes Schar und eine Saatgutausbringeinrichtung. Die landwirtschaftliche Sämaschine kann dazu eingerichtet sein, eine Drillsaat und/oder eine Einzelkornsaat auszuführen. Die Saatgutausbringeinrichtung kann ein Schussrohr aufweisen, welches dazu eingerichtet ist, im Betrieb der landwirtschaftlichen Sämaschine, insbesondere von der Saatgutausbringeinrichtung, beschleunigtes Saatgut in eine Säfurche einer landwirtschaftlichen Nutzfläche einzubringen und/oder zu schießen.

Die Andruckrollenscheiben sind in Deckung zueinander angeordnet. Die Andruckrollenscheiben können gleichgroß sein oder voneinander abweichende Größen aufweisen. Dadurch, dass die Andruckrollenscheiben zueinander angewinkelt sind, sind die Andruckrollenscheiben schräg, beziehungsweise geneigt, zueinander angeordnet. Die zwei zueinander angewinkelten Andruckrollenscheiben können insbesondere V-förmig angeordnet sein. Die zwei Andruckrollenscheiben weisen jeweils eine Scheibenflanke auf. Die Scheibenflanke umfasst die seitliche Oberfläche der Andruckrollenscheibe. Die zwei zueinander angewinkelten Andruckrollenscheiben stellen eine Scheibenanordnung dar. Die zwei Andruckrollenscheiben, insbesondere die der jeweils anderen Andruckrollenscheibe zugewandten Innenflächen der Andruckrollenscheiben, sind in einem Scheibenneigungswinkel zueinander angewinkelt. Der Scheibenneigungswinkel ist vorzugsweise ein spitzer Winkel. Im Betrieb der landwirtschaftlichen Sämaschine sind die zwei Andruckrollenscheiben derart räumlich orientiert, dass sich die Scheibenanordnung in Vertikalrichtung, insbesondere nach oben, öffnet. Vorzugsweise öffnet sich die Scheibenanordnung infolge der räumlichen Orientierung nach hinten oben. Im Betrieb der landwirtschaftlichen Sämaschine ist die Saatgutandruckrolle derart angeordnet, dass sich die Scheibenanordnung mit dem Scheibenneigungswinkel nach, inbesondere hinten, oben öffnet. Dadurch, dass die zwei Andruckrollenscheiben zueinander angewinkelt sind, läuft die Scheibenanordnung spitz zu, wobei der spitz zulaufende Bereich im Betrieb der landwirtschaftlichen Sämaschine der landwirtschaftlichen Nutzfläche, beziehungsweise dem Furchengrund der Säfurche, zugewandt ist. Der Scheibenneigungswinkel liegt in einem Bereich zwischen 1 und 20 Grad, vorzugsweise zwischen 1 und 10 Grad, besonders bevorzugt zwischen 1 und 6 Grad.

In einer weiteren bevorzugten Ausführungsform der erfindungsgemäßen Saatgutandruckrolle weist die Saatgutandruckrolle einen Kontaktbereich auf, in welchem die zwei Andruckrollenscheiben einander berühren. In dem Kontaktbereich berühren die zwei Andruckrollenscheiben einander vorzugsweise flächig oder entlang einer Kontaktlinie. In dem Kontaktbereich liegen die zwei Andruckrollenscheiben, insbesondere flächig, aneinander an. In dem Kontaktbereich können die beiden Andruckrollenscheiben aneinandergedrückt, beziehungsweise gepresst, werden, insbesondere infolge Ihrer Anordnung zueinander. In dem Kontaktbereich sind außenliegende Bereiche der Andruckrollenscheiben vorzugsweise miteinander in Kontakt. Alternativ können die zwei Andruckrollenscheiben in dem Kontaktbereich beabstandet voneinander, beziehungsweise berührungsfrei zueinander, angeordnet sein und somit einen Spalt zwischen den zwei Andruckrollenscheiben bilden, wobei der Spalt von einem Zwischenkörper derart ausgefüllt wird, dass der Zwischenkörper in dem Kontaktbereich von den zwei Andruckrollenscheiben berührt wird. Im Betrieb der landwirtschaftlichen Sämaschine ist der Kontaktbereich im Wesentlichen auf einer der landwirtschaftlichen Nutzfläche, beziehungsweise dem Furchengrund der Säfurche, zugewandten Seite der Saatgutandruckrolle befindlich. Im Betrieb der landwirtschaftlichen Sämaschine befindet sich der Kontaktbereich, zumindest bereichsweise, innerhalb der Säfurche. Ferner berührt der Kontaktbereich, zumindest bereichsweise, im Betrieb der landwirtschaftlichen Sämaschine vorzugsweise den Furchengrund der Säfurche.

In einer anderen bevorzugten Ausführungsform der erfindungsgemäßen Saatgutandruckrolle erstreckt sich der Kontaktbereich entlang zumindest eines Teilabschnitts des Außenumfangs der zwei Andruckrollenscheiben. Der Außenumfang der zwei Andruckrollenscheiben kann kreisbogenförmig ausgebildet sein. Dadurch, dass sich der Kontaktbereich entlang zumindest eines Teilabschnitts des Außenumfangs der zwei Andruckrollenscheiben erstreckt, berühren die zwei Andruckrollenscheiben entlang zumindest eines Teilabschnitts des Außenumfangs einander.

In einer bevorzugten Ausführungsform der erfindungsgemäßen Saatgutandruckrolle erstreckt sich der Kontaktbereich entlang eines Kontaktwinkelbereichs von zumindest 30 Grad, vorzugsweise zumindest 100 Grad, besonders bevorzugt zumindest 160 Grad. Im Betrieb der landwirtschaftlichen Sämaschine wird in dem Kontaktbereich ein Eindringen der Erde der landwirtschaftlichen Nutzfläche zwischen den zwei Andruckrollenscheiben verhindert. Folglich wird im Betrieb der landwirtschaftlichen Sämaschine entlang des Kontaktwinkelbereichs ein Eindringen der Erde der landwirtschaftlichen Nutzfläche zwischen den zwei Andruckrollenscheiben verhindert.

In einer anderen Ausführungsform der erfindungsgemäßen Saatgutandruckrolle weist die Saatgutandruckrolle einen Abstandsbereich auf, in welchem die zwei Andruckrollenscheiben zueinander berührungsfrei angeordnet sind. In dem Abstandsbereich sind außenliegende Bereiche der zwei Andruckrollenscheiben beabstandet voneinander angeordnet. Im Betrieb der landwirtschaftlichen Sämaschine ist der Abstandsbereich im Wesentlichen auf einer der landwirtschaftlichen Nutzfläche, beziehungsweise dem Furchengrund der Säfurche, abgewandten Seite der Saatgutandruckrolle befindlich. Im Betrieb der landwirtschaftlichen Sämaschine kann sich der Abstandsbereich vollständig außerhalb der Säfurche befinden. Ferner ist der Abstandsbereich, zumindest bereichsweise, im Betrieb der landwirtschaftlichen Sämaschine vorzugsweise berührungsfrei zu der Säfurche, insbesondere dem Furchengrund der Säfurche, angeordnet. Alternativ kann sich im Betrieb der landwirtschaftlichen Sämaschine der Bereich des Abstandsbereichs, welcher sich in Fahrtrichtung in der vorderen Hälfte der Saatgutandruckrolle befindet, vollständig außerhalb der Säfurche befinden und der Bereich des Abstandsbereichs, welcher sich in Fahrtrichtung in der hinteren Hälfte der Saatgutandruckrolle befindet, zumindest bereichsweise, innerhalb der Säfurche befinden. Folglich ist die Wahrscheinlichkeit reduziert, dass in dem Bereich des Abstandsbereichs, welcher sich in Fahrtrichtung in der vorderen Hälfte der Saatgutandruckrolle befindet, Erde zwischen den zwei Andruckrollenscheiben eindringt. Ferner ist die Wahrscheinlichkeit erhöht, dass zwischen den zwei Andruckrollenscheiben eingedrungene Erde in dem Bereich des Abstandsbereichs, welcher sich in Fahrtrichtung in der hinteren Hälfte der Saatgutandruckrolle befindet, austritt.

In einer Ausführungsform der erfindungsgemäßen Saatgutandruckrolle weist die Lauffläche einen ersten Laufflächenabschnitt, welcher von der ersten Andruckrollenscheibe getragen wird und einen zweiten Laufflächenabschnitt, welcher von der zweiten Andruckrollenscheibe getragen wird, auf. Der erste Laufflächenabschnitt erstreckt sich bereichsweise über den Kontaktbereich und bereichsweise über den Abstandsbereich. Der zweite Laufflächenabschnitt erstreckt sich bereichsweise über den Kontaktbereich und bereichsweise über den Abstandsbereich. In dem Kontaktbereich sind der erste und zweite Laufflächenabschnitt benachbart angeordnet. Folglich berühren der erste und zweite Laufflächenabschnitt in dem Kontaktbereich einander. In dem Abstandsbereich sind der erste und zweite Laufflächenabschnitt beabstandet voneinander angeordnet. Folglich sind in dem Abstandsbereich der erste und zweite Laufflächenabschnitt zueinander berührungsfrei angeordnet.

In einer anderen Ausführungsform der erfindungsgemäßen Saatgutandruckrolle teilen sich der erste und zweite Laufflächenabschnitt in einem ersten und zweiten Teilungspunkt. Der erste und zweite Laufflächenabschnitt teilen sich in dem ersten Teilungspunkt. Der erste und zweite Laufflächenabschnitt teilen sich in dem zweiten Teilungspunkt. Der erste und zweite Teilungspunkt stellt auf der Lauffläche der Saatgutandruckrolle jeweils einen Übergang zwischen dem Kontaktbereich und dem Abstandsbereich dar.

In einer weiteren bevorzugten Ausführungsform der erfindungsgemäßen Saatgutandruckrolle liegen der erste und zweite Teilungspunkt im Betrieb der landwirtschaftlichen Sämaschine auf unterschiedlichen Höhen. Der erste Teilungspunkt liegt in Vertikalrichtung oberhalb des zweiten Teilungspunktes. Der erste Teilungspunkt liegt im Betrieb der landwirtschaftlichen Sämaschine in Fahrtrichtung vor dem zweiten Teilungspunkt. Wenn der erste Teilungspunkt im Betrieb der landwirtschaftlichen Sämaschine in Fahrtrichtung vor dem zweiten Teilungspunkt liegt, so wird die Wahrscheinlichkeit reduziert, dass Erde zwischen den zwei Andruckrollenscheiben eindringt. Wenn der erste Teilungspunkt im Betrieb der landwirtschaftlichen Sämaschine in Fahrtrichtung vor dem zweiten Teilungspunkt liegt, so kann zwischen den zwei Andruckrollenscheiben eingedrungene Erde, insbesondere in Fahrtrichtung hinter dem zweiten Teilungspunkt, austreten. Der Kontaktbereich und der Abstandsbereich werden entlang einer Trennlinie voneinander getrennt, wobei sich die Trennlinie zwischen dem ersten und zweiten Teilungspunkt erstreckt. Dadurch, dass der erste und zweite Teilungspunkt in Vertikalrichtung auf unterschiedlichen Höhen liegen, verläuft im Betrieb der landwirtschaftlichen Sämaschine die Trennlinie schräg zur landwirtschaftlichen Nutzfläche. In dem Kontaktbereich bilden die Laufflächen der Andruckrollenscheiben eine ungeteilte, insbesondere stetige beziehungsweise kontinuierliche, Lauffläche der Saatgutandruckrolle. Der Kontaktbereich und der Abstandsbereich sind entlang einer ersten und zweiten Grenzfläche benachbart zueinander angeordnet. Die erste und zweite Grenzfläche befinden sich jeweils zwischen dem Kontaktbereich und Abstandsbereich. Der erste Teilungspunkt kann Bestandteil der ersten Grenzfläche sein. Der zweite Teilungspunkt kann Bestandteil der zweiten Grenzfläche sein. Folglich kann die Trennlinie die erste und zweite Grenzfläche schneiden oder sich, zumindest bereichsweise, entlang der ersten und zweiten Grenzfläche erstrecken. Die Trennlinie kann im Wesentlichen geradlinig verlaufen. Im Betrieb der landwirtschaftlichen Sämaschine kann die Trennlinie geneigt gegenüber der landwirtschaftlichen Nutzfläche verlaufen. Alternativ kann im Betrieb der landwirtschaftlichen Sämaschine die Trennlinie horizontal zur landwirtschaftlichen Nutzfläche verlaufen.

In einer weiteren bevorzugten Ausführungsform der erfindungsgemäßen Saatgutandruckrolle sind die zwei Andruckrollenscheiben verformbar, insbesondere elastisch verformbar. Die zwei Andruckrollenscheiben können zumindest in dem Kontaktbereich elastisch verformbar sein. Die zwei Andruckrollenscheiben können in dem Abstandsbereich elastisch verformbar sein. Wenn die zwei Andruckrollenscheiben in dem Kontaktbereich einander berühren, können sich die zwei Andruckrollenscheiben in dem Abstandsbereich verformen. Die zwei Andruckrollenscheiben sind im Kontaktbereich insbesondere gegeneinander verspannt und/oder entspannen sich im Abstandsbereich. Die zwei Andruckrollenscheiben sind aus einem elastisch verformbaren Material ausgebildet. Das elastisch verformbare Material kann ein Elastomer, wie beispielsweise Gummi, sein. Das Elastomer kann mittels Vulkanisation aus Thermoplasten hergestellt sein. Die Thermoplasten umfassen Kautschuk, wie beispielsweise Naturkautschuk oder Synthesekautschuk. Das elastisch verformbare Material kann eine vergleichsweise hohe Elastizität und folglich ein vergleichsweise geringes Elastizitätsmodul aufweisen. Das elastisch verformbare Material weist vorzugsweise eine Materialhärte zwischen 25 und 100 Shore D, vorzugsweise zwischen 50 und 100 Shore D, besonders bevorzugt zwischen 85 und 100 Shore D auf. In einer bevorzugten Ausführungsform weist das elastisch verformbare Material eine Materialhärte von zumindest annährend 65 Shore D auf.

In einer weiteren Ausführungsform der erfindungsgemäßen Saatgutandruckrolle sind die zwei Andruckrollenscheiben dazu eingerichtet, sich beim Ausführen einer Drehbewegung, insbesondere im Kontaktbereich, zu verformen. Durch das Berühren der zwei Andruckrollenscheiben können sich die zwei Andruckrollenscheiben jeweils nach innen wölben. Durch das Berühren der zwei Andruckrollenscheiben können sich die zwei Andruckrollenscheiben im Kontaktbereich und/oder Abstandsbereich nach innen wölben. Dadurch, dass die zwei Andruckrollenscheiben verformt werden, ist im Betrieb der landwirtschaftlichen Sämaschine die Wahrscheinlichkeit reduziert, dass Erde an den Scheibenflanken anhaftet und die Wahrscheinlichkeit erhöht, dass sich anhaftende Erde von den Scheibenflanken löst, beziehungsweise abfällt. Im Betrieb der landwirtschaftlichen Sämaschine führen die zwei Andruckrollenscheiben eine Drehbewegung aus. Dadurch, dass sich die zwei Andruckrollenscheiben im Betrieb der landwirtschaftlichen Sämaschine durch eine Säfurche bewegen, führen die zwei Andruckrollenscheiben eine Drehbewegung aus.

In einer anderen Ausführungsform der erfindungsgemäßen Saatgutandruckrolle ist die Lauffläche der Saatgutandruckrolle dazu eingerichtet, sich beim Ausführen einer Drehbewegung der zwei Andruckrollenscheiben, insbesondere im Kontaktbereich, zu verformen. Die Lauffläche der Saatgutandruckrolle wird durch das Berühren der zwei Andruckrollenscheiben im Kontaktbereich derart verformt, dass im Betrieb der landwirtschaftlichen Sämaschine ein Auffangen des Saatguts und ein Andrücken des Saatguts in der Säfurche an der vorgesehenen Position gewährleistet wird. Dadurch, dass die Lauffläche der Saatgutandruckrolle dazu eingerichtet ist, sich beim Ausführen einer Drehbewegung der Andruckrollenscheiben, insbesondere im Kontaktbereich, zu verformen, ist die Lauffläche im Querschnitt ungekrümmt. Folglich weist die Lauffläche im Querschnitt einen geradlinigen Bereich auf.

In einer Ausführungsform der erfindungsgemäßen Saatgutandruckrolle ist die erste Andruckrollenscheibe dazu eingerichtet, sich um eine erste Drehachse zu drehen, und die zweite Andruckrollenscheibe dazu eingerichtet, sich um eine zweite Drehachse zu drehen, wobei die erste Drehachse und die zweite Drehachse zueinander angewinkelt sind. Die erste und zweite Drehachse sind in einem Achsenneigungswinkel gegenüber einer Horizontalen, die quer zur Fahrtrichtung liegt, angewinkelt. Der Achsenneigungswinkel ist ein spitzer Winkel. Der Achsenneigungswinkel liegt in einem Bereich zwischen 1 und 20 Grad, vorzugsweise zwischen 1 und 12 Grad, besonders bevorzugt zwischen 1 und 5 Grad. Die erste und zweite Drehachse sind jeweils in einem Referenzneigungswinkel zu einer Horizontalen, die in Fahrtrichtung liegt angewinkelt. Die erste und zweite Drehachse sind jeweils in einem Referenzneigungswinkel zu einer Vertikalen angewinkelt. Die Andruckrollenscheiben sind mithin insbesondere in zwei Richtungen gegenüber einer Ebene, die aufrecht und in Fahrtrichtung liegt, geneigt. Der Referenzneigungswinkel liegt in einem Bereich zwischen 0,5 und 10 Grad, vorzugsweise zwischen 0,5 und 6 Grad, besonders bevorzugt zwischen 0,5 und 2,5 Grad. Die Saatgutandruckrolle kann zwei Lager, insbesondere Wälzlager, der zwei Andruckrollenscheiben aufweisen. Alternativ können die zwei Andruckrollenscheiben jeweils ein Gleitlager aufweisen. In dem Lager kann eine Achse angeordnet sein. Die Achse kann zudem an einem Halteelement, insbesondere einem Tragarm, der landwirtschaftlichen Sämaschine angeordnet sein. Im Betrieb der landwirtschaftlichen Sämaschine führt das Lager die Andruckrollenscheibe relativ zu dem Halteelement. Folglich wird mittels des Lagers ein Rotieren der Andruckrollenscheibe ermöglicht.

In einer weiteren bevorzugten Ausführungsform der erfindungsgemäßen Saatgutandruckrolle weisen die zwei Andruckrollenscheiben jeweils mehrere seitliche außenliegende Antriebserhebungen auf. Die mehreren seitlichen Antriebserhebungen sind an den Scheibenflanken, insbesondere den außenliegenden Bereichen der Scheibenflanken, der zwei Andruckrollenscheiben angeordnet. Die zwei Andruckrollenscheiben weisen jeweils einen umlaufenden Erhebungspfad auf, entlang dessen jeweils mehrere seitliche Antriebserhebungen angeordnet sind. Der Außenumfang der Andruckrollenscheiben und die Erhebungspfade der zwei Andruckrollenscheiben stellen konzentrische Kreise dar, wobei die Erhebungspfade jeweils einen kleineren Radius aufweisen als der Außenumfang der Andruckrollenscheiben. Die mehreren Antriebserhebungen sind jeweils entlang der Erhebungspfade der Andruckrollenscheiben angeordnet beziehungsweise aufgereiht. Benachbarte Antriebserhebungen sind entlang der Erhebungspfade der Andruckrollenscheiben vorzugsweise äquidistant angeordnet. Die seitlichen Antriebserhebungen liegen im Betrieb der landwirtschaftlichen Sämaschine an den Furchenflanken der Säfurche an. Folglich wird die Saatgutandruckrolle mittels der Antriebserhebungen angetrieben. Somit ist die Saatgutandruckrolle auch antreibbar, wenn sich die Lauffläche der Saatgutandruckrolle berührungsfrei zum Furchengrund der Säfurche bewegt. Außerdem ist die Saatgutandruckrolle antreibbar, wenn im Betrieb der landwirtschaftlichen Sämaschine die Lauffläche der Saatgutandruckrolle den Furchengrund der Säfurche berührt und die Antriebserhebungen die Furchenflanken der Säfurche berühren.

Die der Erfindung zugrunde liegende Aufgabe wird ferner gelöst durch ein Säaggregat der eingangs genannten Art, wobei die zwei Andruckrollenscheiben der Saatgutandruckrolle an dem Tragarm angeordnet sind, wobei der Tragarm vorzugsweise mittels eines oder mehrerer Vorspannelemente vorgespannt ist. Alternativ ist der Tragarm starr angeordent. Das erfindungsgemäße Säaggregat umfasst eine Saatgutandruckrolle, welche nach einer der vorstehend beschriebenen Ausführungsformen ausgebildet ist. Hinsichtlich der Vorteile und Modifikationen des erfindungsgemäßen Säaggregats wird somit auf die Vorteile und Modifikationen der erfindungsgemäßen Saatgutandruckrolle verwiesen. Der Tragarm ist um eine Drehachse drehbar gelagert. Der Tragarm kann über Vorspannelemente vorspannbar sein. Folglich weisen die Vorspannelemente eine Vorspannung auf. Die Vorspannelemente, insbesondere die Vorspannung der Vorspannelemente, kann verstellbar, insbesondere einstellbar, sein. Die Vorspannelemente können Federn, insbesondere Zugfedern und/oder Gummiformelemente, umfassen. Der Tragarm kann einen Anschlag aufweisen. Der Anschlag kann an der Unterseite, beziehungsweise der im Betrieb des Säaggregates und/oder der landwirtschaftlichen Sämaschine der landwirtschaftlichen Nutzfläche zugewandten Seite, des Tragarms befindlich sein. Der Anschlag kann verstellbar, insbesondere einstellbar, sein.

Die der Erfindung zugrunde liegende Aufgabe wird ferner gelöst durch eine Sämaschine der eingangs genannten Art, wobei die Saatgutandruckrolle nach einer der vorstehend beschriebenen Ausführungsformen ausgebildet ist oder Bestandteil eines Säaggregats nach einer der vorstehend beschriebenen Ausführungsformen ist. Hinsichtlich der Vorteile und Modifikationen der erfindungsgemäßen Sämaschine wird somit auf die Vorteile und Modifikationen der erfindungsgemäßen Saatgutandruckrolle, beziehungsweise des erfindungsgemäßen Säaggregats, verwiesen. Mittels der Sämaschine kann Saatgut auf einer landwirtschaftlichen Nutzfläche ausgebracht werden. Die Sämaschine kann dazu eingerichtet sein, auf einer landwirtschaftlichen Nutzfläche Säfurchen zu erzeugen. Mittels der Saatgutandruckrolle der Sämaschine kann das von der Sämaschine ausgebrachte Saatgut in den von der Sämaschine erzeugten Säfurchen angedrückt und/oder gefangen werden.

Der im Vorstehenden beschriebene Betrieb der Sämaschine entspricht dem Betrieb der Saatgutandruckrolle bzw. des Säaggregates sofern Merkmale, die nur im Zusammenhang mit dem Säaggregat bzw. der Sämaschine beschrieben sind, unbeachtlich sind.

Nachfolgend werden bevorzugte Ausführungsformen der Erfindung unter Bezugnahme auf die beiliegenden Zeichnungen näher erläutert und beschrieben. Dabei zeigen:
- Fig. 1: eine Seitenansicht eines erfindungsgemäßen Säaggregats;
- Fig. 2: eine perspektivische Ansicht eines weiteren erfindungsgemäßen Säaggregats;
- Fig. 3: eine Seitansicht des in der Fig. 2 abgebildeten Säaggregats;
- Fig. 4: eine Rückansicht des in der Fig. 2 abgebildeten Säaggregats;
- Fig. 5: eine Frontansicht einer ersten und zweiten Andruckrollenscheibe und einem Tragarm;
- Fig. 6: eine Frontansicht einer erfindungsgemäßen Saatgutandruckrolle;
- Fig. 7: eine Frontansicht einer weiteren erfindungsgemäßen Saatgutandruckrolle;
- Fig. 8: eine Schnittdarstellung der in der Fig. 5 abgebildeten ersten und zweiten Andruckrollenscheibe;
- Fig. 9: eine Schnittdarstellung der in der Fig. 6 abgebildeten erfindungsgemäßen Saatgutandruckrolle;
- Fig. 10: eine Schnittdarstellung der in der Fig. 7 abgebildeten erfindungsgemäßen Saatgutandruckrolle;
- Fig. 11: eine Frontansicht einer ersten und zweiten Andruckrollenscheibe samt Tragarm in einem ersten Montagezustand einer erfindungsgemäßen Saatgutandruckrolle;
- Fig. 12: die in der Fig. 11 abgebildeten Andruckrollenscheiben samt Tragarm in einem zweiten Montagezustand der Saatgutandruckrolle;
- Fig. 13: die in der Fig. 11 abgebildeten Andruckrollenscheiben samt Tragarm nach Abschluss der Montage der Saatgutandruckrolle;
- Fig. 14: eine Schnittdarstellung der in der Fig. 11 gezeigten ersten und zweiten Andruckrollenscheibe samt Tragarm;
- Fig. 15: eine Schnittdarstellung der in der Fig. 12 abgebildeten Saatgutandruckrolle;
- Fig. 16: eine Schnittdarstellung der in der Fig. 13 abgebildeten Saatgutandruckrolle;
- Fig. 17: eine Frontansicht einer ersten und zweiten Andruckrollenscheibe im unmontierten und im montierten, also eine erfindungsgemäße Saatgutandruckrolle bildenden, Zustand; und
- Fig. 18: eine Frontansicht einer auf einer landwirtschaftlichen Nutzfläche befindlichen erfindungsgemäßen Saatgutandruckrolle.

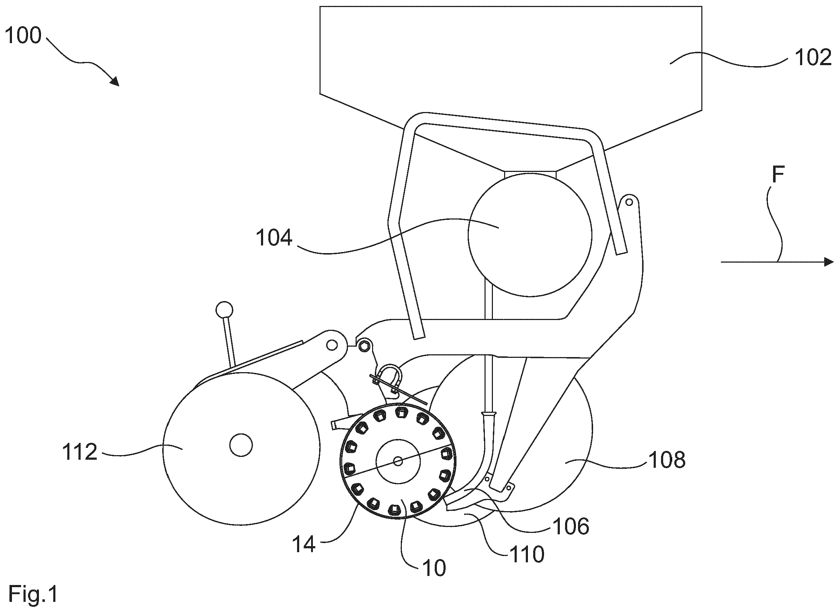

Die Fig. 1 zeigt ein landwirtschaftliches Säaggregat 100, welches als Bestandteil einer landwirtschaftlichen Sämaschine während eines Sävorgangs auf einer landwirtschaftlichen Nutzfläche eingesetzt werden kann. Das Säaggregat 100 umfasst den Ausbringmaterialbehälter 102, die Überdruckvereinzelung 104 und das Schussrohr 106. Im Betrieb des Säaggregats 100 ist der Ausbringmaterialbehälter 102 mit Saatgut gefüllt. Das in dem Ausbringmaterialbehälter 102 befindliche Saatgut wird mittels der Überdruckvereinzelung 104 vereinzelt und zum Schussrohr 106 transportiert. Das vereinzelte Saatgut wird mittels Überdruck aus dem Schussrohr 106 in Richtung der landwirtschaftlichen Nutzfläche geschossen. Ferner umfasst das Säaggregat 100, den Furchenöffner 108, das Tiefenführungsrad 110, die Saatgutandruckrolle 10 und den Furchenschließer 112, wobei der vordere bzw. in Fahrtrichtung F rechte Furchenöffner 108 und das vordere bzw. rechte Tiefenführungsrad 110 demontiert sind, um den Blick auf das Schussrohr 106 und die Saatgutandruckrolle 10 freizugeben. Im Betrieb des Säaggregats 100 bewegt sich das Säaggregat 100 in Fahrtrichtung F. Der Furchenöffner 108 fährt durch die landwirtschaftliche Nutzfläche und erzeugt somit eine Säfurche. Das Saatgut wird aus dem Schussrohr 106 in Richtung der durch den Furchenöffner 108 erzeugten Säfurche entgegen der Fahrtrichtung F nach hinten geschossen. Das durch das Schussrohr 106 in Richtung der Säfurche geschossene Saatgut wird an der Lauffläche 14 der Saatgutandruckrolle 10 aufgefangen und abgebremst. Das durch die Lauffläche 14 der Saatgutandruckrolle 10 aufgefangene und abgebremste Saatgut wird mittels der Lauffläche 14 der Saatgutandruckrolle 10 im Furchengrund der Säfurche angedrückt. Durch das Andrücken des Saatguts in dem Furchengrund der Säfurche wird gewährleistet, dass das Saatgut eine große Kontaktfläche mit der Erde der landwirtschaftlichen Nutzfläche aufweist und somit eine ausreichende Wasserversorgung des Saatguts gewährleistet wird. Dadurch, dass das Säaggregat 100 sich im Betrieb auf der landwirtschaftlichen Nutzfläche in Fahrtrichtung F bewegt, dreht sich die Saatgutandruckrolle 10 kontinuierlich. Die Drehbewegung der Saatgutandruckrolle 10 wird insbesondere dadurch hervorgerufen, dass die Lauffläche 14 der Saatgutandruckrolle 10 im Betrieb des Säaggregats 100 Kontakt mit dem Furchengrund der Säfurche hat und somit beim Fahren des Säaggregats 100 in Fahrtrichtung F angetrieben wird. Die Drehbewegung der Saatgutandruckrolle 10 kann alternativ oder zusätzlich dadurch hervorgerufen werden, wenn die Saatgutandruckrolle 10 seitlich Kontakt mit zumindest einer Furchenflanke der Säfurche hat. Der Furchenschließer 112 schließt im Betrieb des Säaggregats 100 die Säfurche, an deren Furchengrund das Saatgut mittels der Saatgutandruckrolle angedrückt wurde. Beim Schließen der Furche mittels des Furchenschließers 112 wird Erdreich der landwirtschaftlichen Nutzfläche in die Säfurche geschoben. Somit wird das in der Säfurche befindliche Saatgut mit Erdreich bedeckt und somit vor Sonnenlicht und vor Austrocknung geschützt. Mittels des Tiefenführungsrads 110 kann der Abstand des Furchenöffners 108, der Saatgutandruckrolle 10 und des Furchenschließers 112 zu der landwirtschaftlichen Nutzfläche eingestellt werden. Somit kann mittels des Tiefenführungsrads 110 beispielsweise die Tiefe der zu erzeugenden Säfurche eingestellt werden.

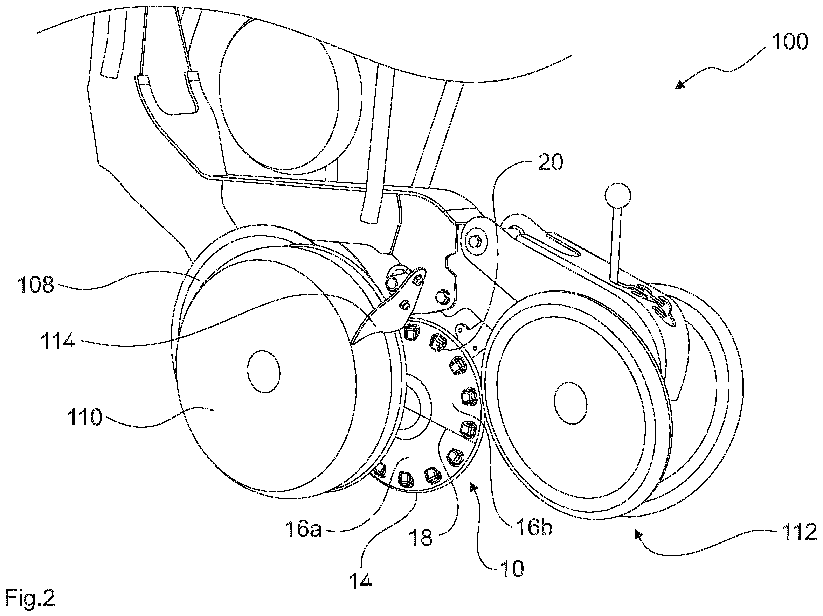

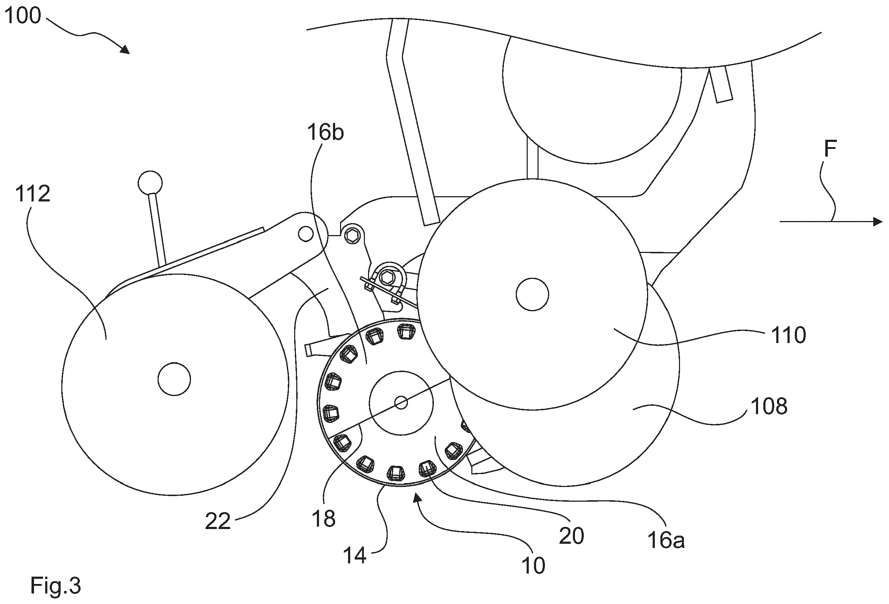

Die Fig. 2 und Fig. 3 zeigen das Säaggregat 100, welches den Furchenöffner 108, das Tiefenführungsrad 110, den Furchenschließer 112, den Abstreifer 114 und die Saatgutandruckrolle 10 umfasst. Die Saatgutandruckrolle 10 ist in Fahrtrichtung F zwischen dem Furchenöffner 108 und dem Furchenschließer 112 befindlich. Die Saatgutandruckrolle 10 ist in Fahrtrichtung F zwischen dem Tiefenführungsrad 110 und dem Furchenschließer 112 befindlich. Der Furchenöffner 108 umfasst ein Doppelscheibenschar. Das Doppelscheibenschar umfasst zwei zueinander angewinkelte Scheibenschare. Der Furchenschließer 112 umfasst zwei zueinander V-förmig angestellte Andruckrollen. Der Furchenschließer 112 kann im Betrieb des Säaggregats 100 die Säfurche schließen. Bei dem Schließen der Säfurche wird mittels der V-förmig angestellten Andruckrollen des Furchenschließers 112 Erdreich der landwirtschaftlichen Nutzfläche in die Säfurche geschoben. Der Abstreifer 114 ist derart angeordnet, dass im Betrieb des Säaggregats 100 an dem Tiefenführungsrad 110 und/oder an der Saatgutandruckrolle 10 anhaftende Erde abgestreift wird. Die Saatgutandruckrolle 10 ist an dem Tragarm 22 des Säaggregats 100 angeordnet. Der Tragarm 22 ist verschwenkbar ausgebildet. Folglich kann die Saatgutandruckrolle 10 durch ein Verschwenken des Tragarms 22 verschwenkt werden. Durch ein Verschwenken des Tragarms 22 kann eingestellt werden wie tief die Saatgutandruckrolle 10 in die Säfurche der landwirtschaftlichen Nutzfläche eindringt. Durch das Verschwenken des Tragarms 22 kann ferner eingestellt werden, mit welchem Anlagedruck die Saatgutandruckrolle 10 an dem Furchengrund der Säfurche anliegt und/oder mit welchem Anpressdruck die Saatgutandruckrolle 10 das Saatgut in der Säfurche andrückt. Die Saatgutandruckrolle 10 weist einen ersten und zweiten Scheibenbereich 16a, 16b auf. Der erste und zweite Scheibenbereich 16a, 16b sind entlang der Trennlinie 18 zueinander benachbart angeordnet. Somit berühren der erste und zweite Scheibenbereich 16a, 16b einander entlang der Trennlinie 18. Im Betrieb des Säaggregats 100 befindet sich der erste Scheibenbereich 16a, im Wesentlichen, auf der der landwirtschaftlichen Nutzfläche zugewandten Seite der Saatgutandruckrolle 10. Im Betrieb des Säaggregats 100 befindet sich der zweite Scheibenbereich 16b, im Wesentlichen, auf der der landwirtschaftlichen Nutzfläche abgewandten Seite der Saatgutandruckrolle 10. Die Saatgutandruckrolle 10 weist mehrere Antriebserhebungen 20 auf. Die mehreren Antriebserhebungen 20 sind entlang eines Erhebungspfades aufgereiht. Im Betrieb des Säaggregats 100 berührt die Lauffläche 14 der Saatgutandruckrolle 10 den Furchengrund der Säfurche. Dadurch, dass die Lauffläche 14 den Furchengrund der Säfurche berührt, wird die Saatgutandruckrolle 10 in eine Drehbewegung versetzt. Die Drehbewegung der Saatgutandruckrolle 10 wird zusätzlich dadurch erreicht, dass die Antriebserhebungen 20 im Betrieb des Säaggregats 100 Kontakt mit den Furchenflanken der Säfurche haben.

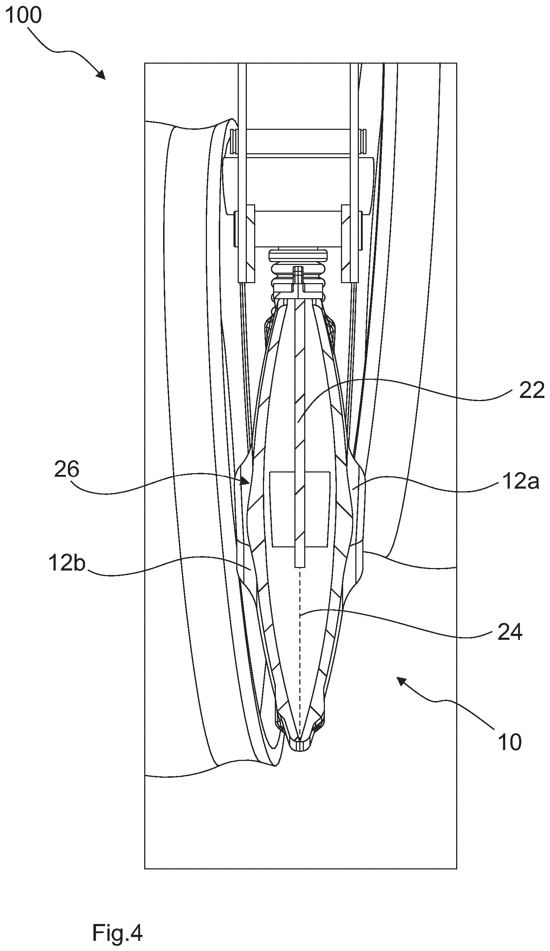

Die Fig. 4 zeigt eine Rückansicht des in Fig. 2 und Fig. 3 dargestellten Säaggregats 100, wobei die Ansicht auf Höhe der Saatgutandruckrolle 10 in Fahrtrichtung F hinter den Drehachsen geschnitten ist, so dass der Blick auf das die Saatgutandruckrolle 10 aufnehmende Ende des Tragarms 22 freigegeben ist. Die Saatgutandruckrolle 10 weist eine erste und zweite Andruckrollenscheibe 12a, 12b auf. An der der landwirtschaftlichen Nutzfläche zugewandten, also unteren, Seite der Saatgutandruckrolle 10 weist die Saatgutandruckrolle 10 den Kontaktbereich 24 auf. Entlang des Kontaktbereichs 24 sind die erste und zweite Andruckrollenscheibe 12a, 12b aneinander gedrückt. Entlang des Kontaktbereichs 24 bilden die erste und zweite Andruckrollenscheibe 12a, 12b folglich einen geschlossenen Bereich der Saatgutandruckrolle 10. Auf der der landwirtschaftlichen Nutzfläche abgewandten Seite der Saatgutandruckrolle 10 weist die Saatgutandruckrolle 10 einen Abstandsbereich 26 auf. In dem Abstandsbereich 26 sind die erste und zweite Andruckrollenscheibe 12a, 12b berührungsfrei zueinander angeordnet.

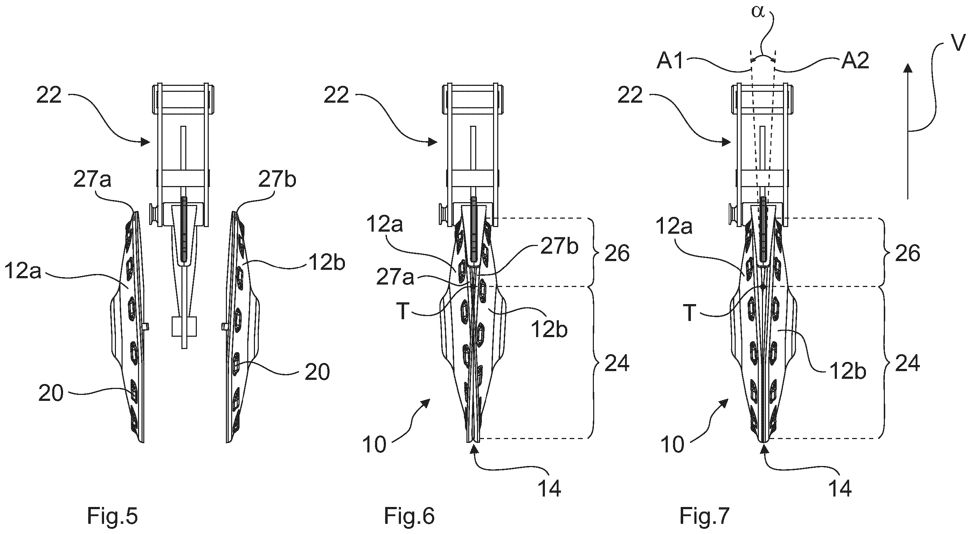

Die Fig. 5 zeigt eine erste und zweite Andruckrollenscheibe 12a, 12b im unmontierten Zustand. Folglich sind die erste und zweite Andruckrollenscheibe 12a, 12b nicht an dem Tragarm 22 montiert. Somit sind die erste und zweite Andruckrollenscheibe 12a, 12b berührungsfrei zueinander. Die erste und zweite Andruckrollenscheibe 12a, 12b weisen jeweils mehrere Antriebserhebungen 20 auf. Die erste Andruckrollenscheibe 12a weist einen erste Laufflächenabschnitt 27a und die zweite Andruckrollenscheibe 12b weist einen zweiten Laufflächenabschnitt 27b auf. Der erste Laufflächenabschnitt 27a erstreckt sich entlang des Außenumfangs der ersten Andruckrollenscheibe 12a. Der zweite Laufflächenabschnitt 27b erstreckt sich entlang des Außenumfangs der zweiten Andruckrollenscheibe 12b.

Die Fig. 6 zeigt eine erste und zweite Andruckrollenscheibe 12a, 12b einer Saatgutandruckrolle 10, wobei die erste und zweite Andruckrollenscheibe 12a, 12b an dem Tragarm 22 montiert sind und sich im Kontaktbereich 24 durchstoßen um zu verdeutlichen, dass diese sich im Kontaktbereich 24 elastisch verformen. Die erste und zweite Andruckrollenscheibe 12a, 12b sind Bestandteil der Saatgutandruckrolle 10. Dadurch, dass die erste und zweite Andruckrollenscheibe 12a, 12b an dem Tragarm 22 montiert sind, weist die Saatgutandruckrolle 10 einen Kontaktbereich 24 und einen Abstandsbereich 26 auf. In dem Kontaktbereich 24 werden die erste und zweite Andruckrollenscheibe 12a, 12b aneinander gedrückt, wie in Fig. 7 abgebildet. In dem Abstandsbereich 26 sind die erste und zweite Andruckrollenscheibe 12a, 12b berührungsfrei zueinander angeordnet. Der Teilungspunkt T stellt den Übergang zwischen dem Kontaktbereich 24 und Abstandsbereich 26 dar. Der in dem Kontaktbereich befindliche Bereich des ersten Laufflächenabschnitts 27a bildet gemeinsam mit dem in dem Kontaktbereich befindlichen Bereich des zweiten Laufflächenabschnitts 27b in dem Kontaktbereich die Lauffläche 14 der Saatgutandruckrolle 10. Der Teilungspunkt T befindet sich auf der Lauffläche 14 der Saatgutandruckrolle 10. Im Kontaktbereich 24 weist die erste Andruckrollenscheibe 12a auf der der zweiten Andruckrollenscheibe 12b abgewandten Seite entlang der Lauffläche 14 der Saatgutandruckrolle 10 eine Verdickung auf. In dem Kontaktbereich 24 weist die zweite Andruckrollenscheibe 12b auf der der ersten Andruckrollenscheibe 12a abgewandten Seite entlang der Lauffläche 14 der Saatgutandruckrolle 10 eine Verdickung auf. Zwischen der Verdickung der ersten Andruckrollenscheibe 12a und der Verdickung der zweiten Andruckrollenscheibe 12b weist die Lauffläche 14 der Saatgutandruckrolle 10 eine Vertiefung auf. Auf der dem Tragarm 22 gegenüberliegenden Seite der Saatgutandruckrolle 10 ist die Verdickung der ersten Andruckrollenscheibe 12a am stärksten ausgeprägt. Auf der dem Tragarm 22 gegenüberliegenden Seite der Saatgutandruckrolle 10 ist die Verdickung der zweiten Andruckrollenscheibe 12b am stärksten ausgeprägt. Auf der dem Tragarm 22 gegenüberliegenden Seite der Saatgutandruckrolle 10 ist die Vertiefung der Lauffläche 14 am stärksten ausgeprägt.

Die Fig. 7 zeigt eine erste und zweite Andruckrollenscheibe 12a, 12b einer Saatgutandruckrolle 10, wobei die erste und zweite Andruckrollenscheibe 12a, 12b an dem Tragarm 22 montiert sind. Der Tragarm 22 befindet sich in Vertikalrichtung V oberhalb der ersten und zweiten Andruckrollenscheibe 12a, 12b. Die erste und zweite Andruckrollenscheibe 12a, 12b werden in dem Kontaktbereich 24 der Saatgutandruckrolle 10 aneinander gepresst und sind somit miteinander verspannt. In dem Bereich, in welchem die erste und zweite Andruckrollenscheibe 12a, 12b aneinander gepresst werden, bilden die erste und zweite Andruckrollenscheibe 12a, 12b gemeinsam die Lauffläche 14 der Saatgutandruckrolle 10. Dadurch, dass die erste und zweite Andruckrollenscheibe 12a, 12b in dem Kontaktbereich 24 aneinander gepresst werden, werden die erste und zweite Andruckrollenscheibe 12a, 12b verformt. In dem Abstandsbereich 26 sind die erste und zweite Andruckrollenscheibe 12a, 12b beabstandet voneinander angeordnet. Folglich sind die erste und zweite Andruckrollenscheibe 12a, 12b in dem Abstandsbereich 26 verformungsfrei ausgebildet. In dem Abstandsbereich 26 erstreckt sich die erste Scheibenachse A1, die senkrecht zur Drehachse ausgerichtet ist, entlang der Scheibenebene der ersten Andruckrollenscheibe 12a. In dem Abstandsbereich 26 erstreckt sich die zweite Scheibenachse A2, die senkrecht zur Drehachse ausgerichtet ist, entlang der Scheibenebene der zweiten Andruckrollenscheibe 12b. Die erste und zweite Scheibenachse A1, A2 sind in dem Scheibenneigungswinkel α zueinander angeordnet. Folglich sind die Scheibenebene der ersten Andruckrollenscheibe 12a und die Scheibenebene der zweiten Andruckrollenscheibe 12b in dem Scheibenneigungswinkel α zueinander geneigt angeordnet. Der Scheibenneigungswinkel α beträgt 6 Grad. In dem Kontaktbereich 24 wird die erste Andruckrollenscheibe 12a derart verformt, dass sich die der zweiten Andruckrollenscheibe 12b abgewandte Oberfläche der ersten Andruckrollenscheibe 12a in die der zweiten Andruckrollenscheibe 12b abgewandte Richtung auswölbt. Das Auswölben der Oberfläche der ersten Andruckrollenscheibe 12a ist im unteren Bereich der Saatgutandruckrolle 10, welcher im Kontaktbereich 24 befindlich ist, am stärksten ausgeprägt. Der untere Bereich der Saatgutandruckrolle 10 befindet sich auf der dem Tragarm 22 gegenüberliegenden Seite der Saatgutandruckrolle 10. In dem Kontaktbereich 24 ist die zweite Andruckrollenscheibe 12b derart verformt, dass die der ersten Andruckrollenscheibe 12a abgewandte Oberfläche der zweiten Andruckrollenscheibe 12b sich in die der ersten Andruckrollenscheibe 12a abgewandte Richtung auswölbt. Das Auswölben der Oberfläche der zweiten Andruckrollenscheibe 12b ist in dem unteren Bereich der Saatgutandruckrolle 10 am stärksten ausgeprägt. Die erste und zweite Andruckrollenscheibe 12a, 12b werden in dem Kontrabereich 24 derart verformt, dass die durch die erste und zweite Andruckrollenscheibe 12a, 12b gebildete Lauffläche 14 der Saatgutandruckrolle 10, zumindest auf der Unterseite der Saatgutandruckrolle 10, vertiefungsfrei ausgebildet ist. Folglich weist die Lauffläche 14, zumindest in dem unteren Bereich der Saatgutandruckrolle 10, keine Verdickungen auf. Somit wird gewährleistet, dass im Betrieb mittels der Lauffläche 14 der Saatgutandruckrolle 10 Saatgut gefangen und in einer Säfurche angedrückt wird.

Die Fig. 5-7 zeigen ferner ein oben zwischen den Andruckrollenscheiben 12a, 12b angeordnetes Schutzblech. Dieses Schutzblech hat vorliegend eine zumindest annährend dreieckige Form. Das Schutzblech ist in Fahrtrichtung vorne oben zwischen den Andruckrollenscheiben 12a, 12b angeordnet. Das Schutzblech dient zum einen dazu, dass kein Erdreich ungewünscht zwischen die Andruckrollenscheiben 12a, 12b gelangt. Ferner kann das Schutzblech eine Abstreiffunktion für die Lauffläche 14 übernehmen, wobei anhaftende Erde abgestriffen wird. Außerdem ist denkbar, dass das Schutzblech mit einem Innenabstreifer versehen ist, welcher die Andruckrollenscheiben 12a, 12b auf der Innenseite, vorzugsweise nahe der Lauffläche 14, von anhaftender Erde befreit.

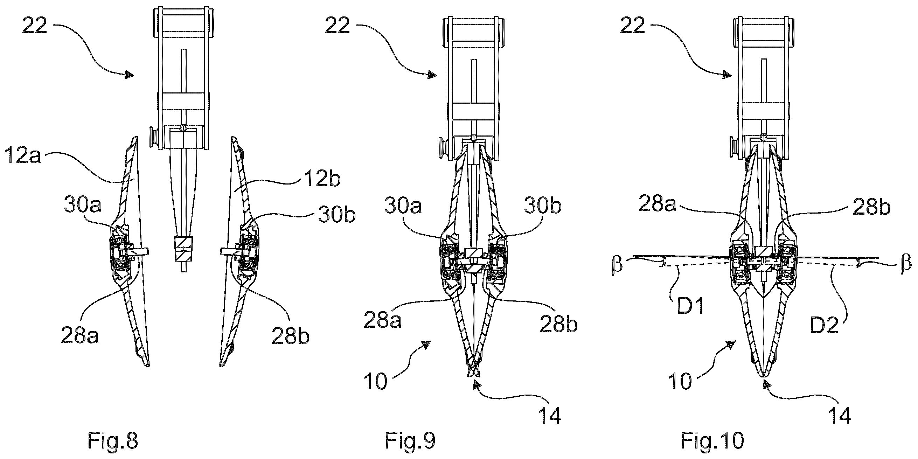

Die Fig. 8 zeigt eine Schnittdarstellung der in der Fig. 5 gezeigten ersten und zweiten Andruckrollenscheibe 12a, 12b sowie des Tragarms 22. Mittig in der Scheibenebene der ersten Andruckrollenscheibe 12a ist ein erstes Lager 30a in der ersten Andruckrollenscheibe 12a angeordnet. Das erste Lager 30a ist als Wälzlager ausgebildet. In dem ersten Lager 30a ist die erste Achse 28a anordnet, welche der Drehachse entspricht. Die erste Achse 28a ist in dem Lager 30a drehbar gelagert. Mittig in der Scheibenebene der zweiten Andruckrollenscheibe 12b ist das zweite Lager 30b in der zweiten Andruckrollenscheibe 12b angeordnet. Die zweite Achse 28b, welche der Drehachse entspricht, ist in dem zweiten Lager 30b angeordnet. Die zweite Achse 28b ist in dem zweiten Lager 30b drehbar gelagert. Das zweite Lager 30b ist als Wälzlager ausgebildet.

Die Fig. 9 zeigt eine Schnittdarstellung der in der Fig. 6 gezeigten ersten und zweiten Andruckrollenscheibe 12a, 12b und des Tragarms 22, wobei die erste und zweite Andruckrollenscheibe 12a, 12b sich im Kontaktbereich 24 durchstoßen, um zu verdeutlichen dass diese gegeneinander gespannt sind. Die die erste Achse 28a und das erste Lager 30a umfassende erste Andruckrollenscheibe 12a ist mittels der ersten Achse 28a an dem Tragarm 22 angeordnet. Die das zweite Lager 30b und die zweite Achse 28b umfassende zweite Andruckrollenscheibe 12b ist mittels der zweiten Achse 28b an dem Tragarm 22 angeordnet. Folglich ist die erste und zweite Andruckrollenscheibe 12a, 12b jeweils drehbar an dem Tragarm 22 gelagert.

Die Fig. 10 zeigt eine Schnittdarstellung der in der Fig. 7 gezeigten ersten und zweiten Andruckrollenscheibe 12a, 12b und des Tragarms 22, wobei die Durchstoßung im Kontaktbereich 24 aufgelöst wurde, so dass die Andruckrollenscheiben 12a, 12b dort aneinander anliegen. Die erste Andruckrollenscheibe 12a ist mittels der ersten Achse 28a an dem Tragarm 22 befestigt. Die erste Achse 28a ist in dem ersten Lager 30a drehbar gelagert. Das erste Lager 30a ist innerhalb der ersten Andruckrollenscheibe 12a befindlich. Die zweite Andruckrollenscheibe 12b ist mittels der zweiten Achse 28b an dem Tragarm 22 befestigt. Die zweite Achse 28b ist in dem zweiten Lager 30b drehbar gelagert. Das zweite Lager 30b ist innerhalb der zweiten Andruckrollenscheibe 12b angeordnet. Die erste Achse 28a verläuft parallel zu der ersten Drehachse D1. Die zweite Achse 28b verläuft parallel zur zweiten Drehachse D2. Die erste und zweite Drehachse D1, D2 sind in dem Achsenneigungswinkel β ggü. einer Horizontalen angewinkelt. Der Achsenneigungswinkel β beträgt 3 Grad. Folglich sind die erste und zweite Achse 28a, 28b in einem Winkel von 6 Grad zueinander angewinkelt.

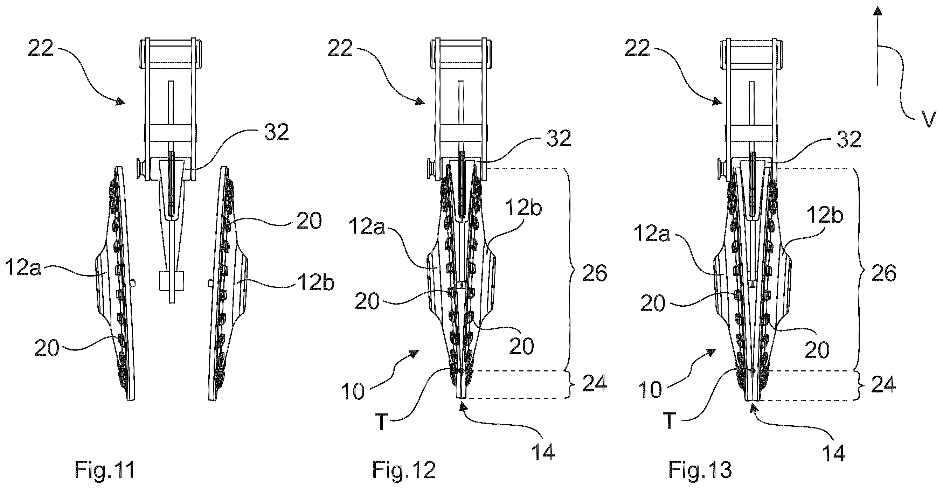

Die Fig. 11 zeigt eine erste und zweite Andruckrollenscheibe 12a, 12b in einem ersten Montagezustand einer Saatgutandruckrolle 10. In dem ersten Montagezustand sind die erste und zweite Andruckrollenscheibe 12a, 12b jeweils noch nicht an dem das Tragarmgelenk 32 umfassenden Tragarm 22 befestigt. Die erste und zweite Andruckrollenscheibe 12a, 12b weisen jeweils mehrere Antriebserhebungen 20 auf.

Die Fig. 12 zeigt die in der Fig. 11 gezeigte erste und zweite Andruckrollenscheibe 12a, 12b in einem zweiten Montagezustand der Saatgutandruckrolle 10. In dem zweiten Montagezustand bilden die erste und zweite Andruckrollenscheiben 12a, 12b gemeinsam die Saatgutandruckrolle 10. Folglich sind die erste und zweite Andruckrollenscheibe 12a, 12b jeweils an dem Tragarm 22 angeordnet. Der Tragarm 22 weist das Tragarmgelenk 32 auf. Der Tragarm 22 ist um das Tragarmgelenk 32 verschwenkbar. Folglich können die erste und zweite Andruckrollenscheibe 12a, 12b verschwenkt werden. Die erste und zweite Andruckrollenscheibe 12a, 12b sind jeweils aus Polyurethan ausgebildet. Die auf der ersten und zweiten Andruckrollenscheibe 12a, 12b angeordneten Antriebserhebungen 20 stellen Vorsprünge der ersten und zweiten Andruckrollenscheibe 12a, 12b dar. In dem Kontaktbereich 24 werden die erste und zweite Andruckrollenscheibe 12a,12b aneinander gedrückt und bilden somit die Lauffläche 14 der Saatgutandruckrolle 10. In dem Abstandsbereich 26 sind die erste und zweite Andruckrollenscheibe 12a, 12b berührungsfrei zueinander angeordnet. Folglich ist die Lauffläche 14 in dem Abstandsbereich 26 unterbrochen. In dem Abstandsbereich 26 liegt eine Öffnung zwischen der ersten und zweiten Andruckrollenscheibe 12a, 12b vor. An dem Teilungspunkt T geht der Abstandsbereich 26 in den Kontaktbereich 24 über.

Die Fig. 13 zeigt die in der Fig. 11 gezeigte erste und zweite Andruckrollenscheibe 12a, 12b nach Abschluss der Montage der Saatgutandruckrolle 10, wobei die erste und zweite Andruckrollenscheibe 12a, 12b jeweils an dem Tragarm 22 angeordnet sind. Die erste und zweite Andruckrollenscheibe 12a, 12b sind verformbar ausgebildet. Die erste und zweite Andruckrollenscheibe 12a, 12b werden in dem Kontaktbereich 24 aneinander gedrückt. Die erste und zweite Andruckrollenscheibe 12a, 12b werden in dem Kontaktbereich 24 stärker aneinander gedrückt als in der Fig. 12 gezeigt. Folglich werden die erste und zweite Andruckrollenscheibe 12a, 12b in dem Kontaktbereich 24 verformt. Durch das Verformen der ersten und zweiten Andruckrollenscheibe 12a, 12b wölben sich die erste und zweite Andruckrollenscheibe 12a, 12b in dem Kontaktbereich 24 jeweils nach außen. Durch das Verformen werden die Antriebserhebungen 20 in dem Kontaktbereich 24 deformiert. Folglich weisen die Antriebserhebungen 20 in dem Kontaktbereich 24 eine andere Form auf als in dem Abstandsbereich 26. Durch das Verformen weist der untere Bereich der Lauffläche 14 eine im Wesentlichen ebene Fläche auf.

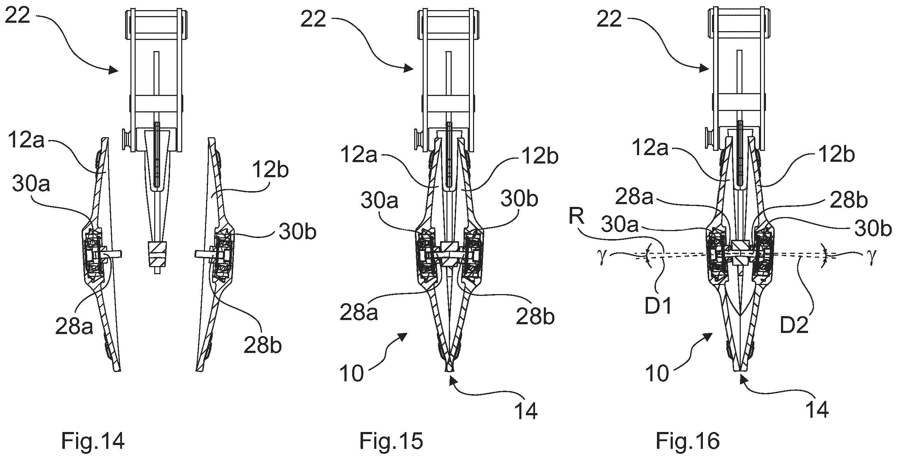

Die Fig. 14 zeigt eine Schnittdarstellung der in der Fig. 11 gezeigten ersten und zweiten Andruckrollenscheibe 12a, 12b und des Tragarms 22. Die erste Andruckrollenscheibe 12a umfasst das erste Lager 30a und die erste Achse 28a, welche in dem ersten Lager 30a angeordnet ist. Folglich ist die erste Achse 28a in dem ersten Lager 30a drehbar gelagert. Das erste Lager 30a ist als Gleitlager ausgebildet. Die zweite Andruckrollenscheibe 12b umfasst das zweite Lager 30b und die zweite Achse 28b, wobei die zweite Achse 28b in dem zweiten Lager 30b angeordnet ist. Folglich ist die zweite Achse 28b in dem zweiten Lager 30b drehbar gelagert. Das zweite Lager 30b ist als Gleitlager ausgebildet.

Die Fig. 15 zeigt eine Schnittdarstellung der in der Fig. 12 gezeigten ersten und zweiten Andruckrollenscheibe 12a, 12b und des Tragarms 22. Die erste Andruckrollenscheibe 12a umfasst das erste Lager 30a und die in dem ersten Lager 30a drehbar gelagerte erste Achse 28a. Die zweite Andruckrollenscheibe 12b umfasst das zweite Lager 30b und die in dem zweiten Lager 30b drehbar gelagerte zweite Achse 28b.

Die Fig. 16 zeigt eine Schnittdarstellung der in der Fig. 13 gezeigten ersten und zweiten Andruckrollenscheibe 12a, 12b und des Tragarms 22. Das erste und zweite Lager 30a, 30b umfasst jeweils eine Glasfaserverstärkung. Das erste und zweite Lager 30a, 30b stellt jeweils einen Einleger dar. Folglich ist das erste Lager 30a in die erste Andruckrollenscheibe 12a eingelegt und das zweite Lager 30b in die zweite Andruckrollenscheibe 12b eingelegt. Die erste Achse 28a verläuft entlang der ersten Drehachse D1 und die zweite Achse 28b verläuft entlang der zweiten Drehachse D2. Die erste und zweite Drehachse D1, D2 sind jeweils in einem Referenzneigungswinkel γ, relativ zu der Referenzachse R geneigt. Der Referenzneigungswinkel γ beträgt 6 Grad.

Die Fig. 14-16 zeigen ferner ein oben zwischen den Andruckrollenscheiben 12a, 12b angeordnetes Schutzblech. Dieses Schutzblech hat vorliegend eine zumindest annährend dreieckige Form. Das Schutzblech ist in Fahrtrichtung vorne oben zwischen den Andruckrollenscheiben 12a, 12b angeordnet. Das Schutzblech dient zum einen dazu, dass kein Erdreich ungewünscht zwischen die Andruckrollenscheiben 12a, 12b gelangt. Ferner kann das Schutzblech eine Abstreiffunktion für die Lauffläche 14 übernehmen, wobei die Lauffläche von anhaftender Erde befreit wird. Außerdem ist denkbar, dass das Schutzblech mit einem Innenabstreifer versehen ist, welcher die Andruckrollenscheiben 12a, 12b auf der Innenseite, vorzugsweise nahe der Lauffläche 14, von anhaftender Erde befreit.

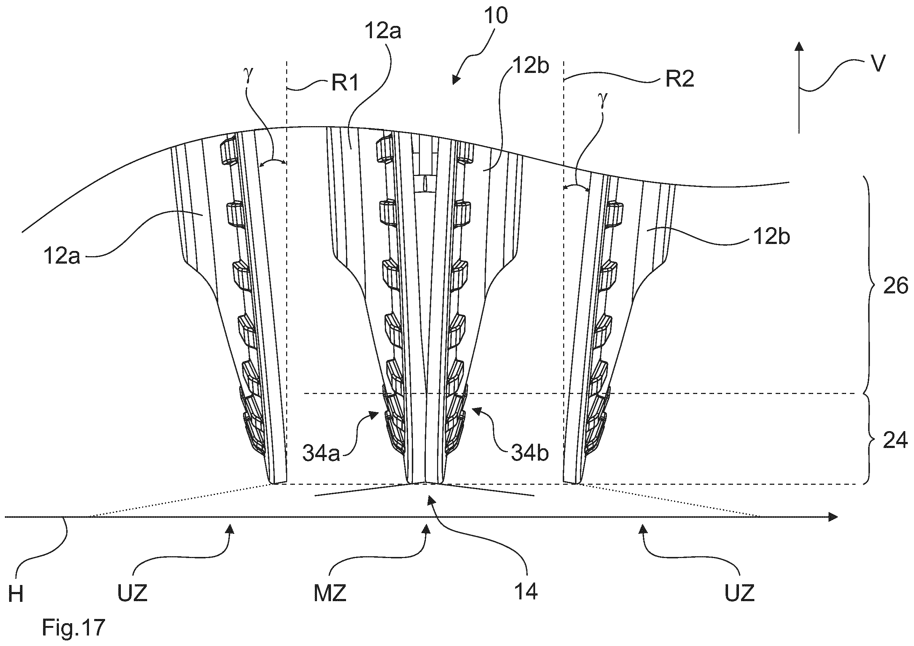

Die Fig. 17 zeigt den unteren Bereich der im unmontierten Zustand UZ befindlichen ersten Andruckrollenscheibe 12a und den unteren Bereich der im unmontierten Zustand UZ befindlichen zweiten Andruckrollenscheibe 12b rechts und links. Ferner zeigt die Fig. 17 den unteren Bereich der im montierten Zustand MZ befindlichen ersten und zweiten Andruckrollenscheiben 12a, 12b im mittleren Bereich. Im unmontierten Zustand UZ ist die erste Andruckrollenscheibe 12a um den Referenzneigungswinkel γ geneigt gegenüber der ersten Referenzachse R1. Die erste Referenzachse R1 verläuft senkrecht zur Horizontalen H. In dem unmontierten Zustand UZ ist die zweite Andruckrollenscheibe 12b um den Referenzneigungswinkel γ geneigt gegenüber der zweiten Referenzachse R2. Die zweite Referenzachse R2 verläuft senkrecht zur Horizontalen H. Der Referenzneigungswinkel γ beträgt 5 Grad. Im montierten Zustand MZ bilden die erste und zweite Andruckrollenscheibe 12a, 12b gemeinsam die Saatgutandruckrolle 10. Die erste und zweite Andruckrollenscheibe 12a, 12b der Saatgutandruckrolle 10 werden in dem Kontaktbereich 24 verformt. In dem Kontaktbereich 24 weist die erste Andruckrollenscheibe 12a die erste Auswölbung 34a und die zweite Andruckrollenscheibe 12b die zweite Auswölbung 34b auf. In dem Abstandsbereich 26 sind die erste und zweite Andruckrollenscheibe 12a, 12b zueinander angewinkelt und weisen somit zueinander einen von Null verschiedenen Winkel auf. In dem Kontaktbereich 24 verlaufen die erste und zweite Andruckrollenscheibe 12a, 12b parallel zueinander. Folglich sind die erste und zweite Andruckrollenschreibe 12a, 12b in diesem Kontaktbereich 24 zueinander nicht angewinkelt. Somit weisen die erste und zweite Andruckrollenscheibe 12a, 12b hier zueinander einen Winkel von Null auf. Die Lauffläche 14 weist in dem Kontaktbereich eine Verdickung auf. Die Verdickung der Lauffläche 14 ist in dem unteren Bereich des Kontaktbereichs 24 am stärksten ausgeprägt. Folglich weist die Lauffläche 14 in dem unteren Bereich des Kontaktbereichs 24 eine erhöhte Materialstärke auf. Die Lauffläche 14 weist, insbesondere in dem unteren Bereich des Kontaktbereichs 24, eine Vertiefung auf.

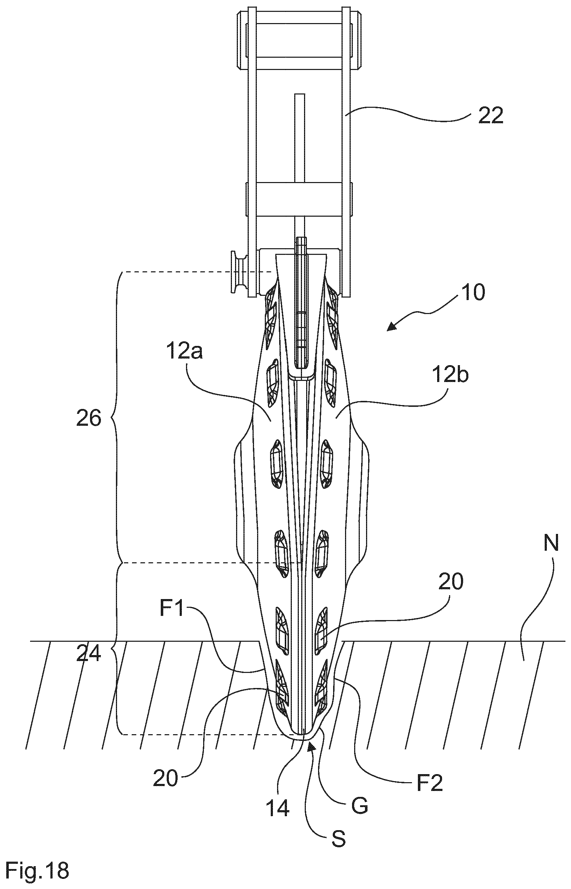

Die Fig. 18 zeigt eine eine erste und zweite Andruckrollenscheibe 12a, 12b umfassende Saatgutandruckrolle 10, welche mittels des Tragarms 22 an einer landwirtschaftlichen Sämaschine angeordnet ist. Im Betrieb der Saatgutandruckrolle 10 bzw. des Säaggregates 100 bzw. der landwirtschaftlichen Sämaschine bewegt sich die Saatgutandruckrolle 10 durch die in der landwirtschaftlichen Nutzfläche N durch die landwirtschaftliche Sämaschine erzeugte Säfurche S. Die Säfurche S umfasst die erste und zweite Furchenflanke F1, F2 und den Furchengrund G. Der Abstandsbereich 26 der Saatgutandruckrolle 10 befindet sich vollständig außerhalb der Säfurche S. Der Kontaktbereich 24 der Saatgutandruckrolle 10 befindet sich bereichsweise innerhalb der Säfurche S. Die Lauffläche 14 der Saatgutandruckrolle 10 hat Kontakt mit dem Furchengrund G. Die in dem Bereich der Saatgutandruckrolle 10, welcher sich in der Säfurche S befindet, befindlichen Antriebserhebungen 20 der Saatgutandruckrolle 10 haben Kontakt mit der ersten beziehungsweise zweiten Furchenflanke F1, F2. Folglich wird die Saatgutandruckrolle 10 dadurch angetrieben, dass die Lauffläche mit dem Furchengrund G Kontakt hat und die Antriebserhebungen 20 Kontakt mit der ersten beziehungsweise zweiten Furchenflanke F1, F2 hat. Somit wird die Saatgutandruckrolle 10 in eine Drehbewegung versetzt.

Die Fig. 18 zeigt ferner ein oben zwischen den Andruckrollenscheiben 12a, 12b angeordnetes Schutzblech. Dieses Schutzblech hat vorliegend eine zumindest annährend dreieckige Form. Das Schutzblech ist in Fahrtrichtung vorne oben zwischen den Andruckrollenscheiben 12a, 12b angeordnet. Das Schutzblech dient zum einen dazu, dass kein Erdreich ungewünscht zwischen die Andruckrollenscheiben 12a, 12b gelangt. Ferner kann das Schutzblech eine Abstreiffunktion für die Lauffläche 14 übernehmen, wobei die Lauffläche von anhaftender Erde befreit wird. Außerdem ist denkbar, dass das Schutzblech mit einem Innenabstreifer versehen ist, welcher die Andruckrollenscheiben 12a, 12b auf der Innenseite, vorzugsweise nahe der Lauffläche 14, von anhaftender Erde befreit.

### Bezugszeichen

- 10: Saatgutandruckrolle
- 12, 12a, 12b: Andruckrollenscheiben
- 14: Lauffläche
- 16a, 16b: Scheibenbereich
- 18: Trennlinie
- 20: Antriebserhebungen
- 22: Tragarm
- 24: Kontaktbereich
- 26: Abstandsbereich
- 27a, 27b: Laufflächenabschnitt
- 28a, 28b: Achse
- 30a, 30b: Lager
- 32: Tragarmgelenk
- 34a, 34b: Auswölbung

- 100: Säaggregat
- 102: Ausbringmaterialbehälter
- 104: Überdruckvereinzelung
- 106: Schussrohr
- 108: Furchenöffner
- 110: Tiefenführungsrad
- 112: Furchenschließer
- 114: Abstreifer

- D1, D2: Drehachse
- T: Teilungspunkt
- R, R1, R2: Referenzachse
- A1, A2: Scheibenachse
- V: Vertikalrichtung
- α: Scheibenneigungswinkel
- β: Achsenneigungswinkel
- γ: Referenzneigungswinkel
- H: Horizontale
- N: landwirtschaftliche Nutzfläche
- S: Säfurche
- F1, F2: Furchenflanke
- G: Furchengrund

- UZ: unmontierter Zustand
- MZ: montierter Zustand

## Patentansprüche

1. Saatgutandruckrolle (10) zur Verwendung in einer landwirtschaftlichen Sämaschine, mit
- einer Lauffläche (14), welche dazu eingerichtet ist, im Betrieb der landwirtschaftlichen Sämaschine Saatgut zu fangen und/oder in einer Säfurche (S) anzudrücken,
**gekennzeichnet durch** zwei zueinander angewinkelte Andruckrollenscheiben (12, 12a, 12b).

2. Saatgutandruckrolle (10) nach Anspruch 1,
**gekennzeichnet durch** einen Kontaktbereich (24), in welchem die zwei Andruckrollenscheiben (12, 12a, 12b) einander berühren.

3. Saatgutandruckrolle (10) nach Anspruch 2,
**dadurch gekennzeichnet, dass** sich der Kontaktbereich (24) entlang zumindest eines Teilabschnitts des Außenumfangs der zwei Andruckrollenscheiben (12, 12a, 12b) erstreckt.

4. Saatgutandruckrolle (10) nach Anspruch 2 oder 3,
**dadurch gekennzeichnet, dass** sich der Kontaktbereich (24) entlang eines Kontaktwinkelbereichs von zumindest 30 Grad, vorzugsweise zumindest 100 Grad, besonders bevorzugt zumindest 160 Grad erstreckt.

5. Saatgutandruckrolle (10) nach einem der vorstehenden Ansprüche,
**gekennzeichnet durch** einen Abstandsbereich (26), in welchem die zwei Andruckrollenscheiben (12, 12a, 12b) zueinander berührungsfrei angeordnet sind.

6. Saatgutandruckrolle (10) nach einem der vorstehenden Ansprüche,
**dadurch gekennzeichnet, dass** die Lauffläche (14)
- einen ersten Laufflächenabschnitt (27a), welcher von der ersten Andruckrollenscheibe (12a) getragen wird; und
- einen zweiten Laufflächenabschnitt (27b), welcher von der zweiten Andruckrollenscheibe (12b) getragen wird,
aufweist.

7. Saatgutandruckrolle (10) nach Anspruch 6,
**dadurch gekennzeichnet, dass** sich der erste und zweite Laufflächenabschnitt (27a, 27b) in einem ersten und zweiten Teilungspunkt (T) teilen.

8. Saatgutandruckrolle (10) nach Anspruch 7,
**dadurch gekennzeichnet, dass** der erste und zweite Teilungspunkt (T) im Betrieb der landwirtschaftlichen Sämaschine auf unterschiedlichen Höhen liegen.

9. Saatgutandruckrolle (10) nach einem der vorstehenden Ansprüche,
**dadurch gekennzeichnet, dass** die zwei Andruckrollenscheiben (12, 12a, 12b) verformbar, insbesondere elastisch verformbar, sind.

10. Saatgutandruckrolle (10) nach einem der vorstehenden Ansprüche,
**dadurch gekennzeichnet, dass** die zwei Andruckrollenscheiben (12, 12a, 12b) dazu eingerichtet sind, sich beim Ausführen einer Drehbewegung, insbesondere im Kontaktbereich (24), zu verformen.

11. Saatgutandruckrolle (10) nach einem der vorstehenden Ansprüche,
**dadurch gekennzeichnet, dass** die Lauffläche (14) der Saatgutandruckrolle (10) dazu eingerichtet ist, sich beim Ausführen einer Drehbewegung der zwei Andruckrollenscheiben (12, 12a, 12b), insbesondere im Kontaktbereich (24), zu verformen.

12. Saatgutandruckrolle (10) nach einer der vorstehenden Ansprüche,
**dadurch gekennzeichnet, dass** die erste Andruckrollenscheibe (12a) dazu eingerichtet ist, sich um eine erste Drehachse (D1) zu drehen, und die zweite Andruckrollenscheibe (12b) dazu eingerichtet ist, sich um eine zweite Drehachse (D2) zu drehen, wobei die erste Drehachse (D1) und die zweite Drehachse (D2) zueinander angewinkelt sind.

13. Saatgutandruckrolle (10) nach einem der vorstehenden Ansprüche,
**dadurch gekennzeichnet, dass** die zwei Andruckrollenscheiben (12, 12a, 12b) jeweils mehrere seitliche außenliegende Antriebserhebungen (20) aufweisen.

14. Säaggregat (100) für eine Sämaschine, mit
- einer Saatgutandruckrolle (10); und
- einem Tragarm (22),
**dadurch gekennzeichnet, dass** die Saatgutandruckrolle (10) nach einem der vorstehenden Ansprüche ausgebildet ist und die zwei Andruckrollenscheiben (12, 12a, 12b) der Saatgutandruckrolle (10) an dem Tragarm (22) angeordnet sind, wobei der Tragarm (22) vorzugsweise mittels eines oder mehrerer Vorspannelemente vorgespannt ist.

15. Sämaschine, mit
- einer Saatgutandruckrolle (10),
**dadurch gekennzeichnet, dass** die Saatgutandruckrolle (10) nach einem der Ansprüche 1 bis 13 ausgebildet oder Bestandteil eines Säaggregats (100) nach Anspruch 14 ist.
